**Europäisches Patentamt**

**European Patent Office**

**Office européen des brevets**

(19)

(11) Veröffentlichungsnummer: **0 448 569 B1**

# (12) EUROPÄISCHE PATENTSCHRIFT

(45) Veröffentlichungstag der Patentschrift: **15.06.94**

(51) Int. Cl.5: **B60T 8/00**

(21) Anmeldenummer: **89912957.1**

(22) Anmeldetag: **16.11.89**

(86) Internationale Anmeldenummer:
**PCT/EP89/01381**

(87) Internationale Veröffentlichungsnummer:
**WO 90/06870 (28.06.90 90/15)**

(54) **ANTIBLOCKIERREGELSYSTEM.**

(43) Veröffentlichungstag der Anmeldung:
**02.10.91 Patentblatt  91/40**

(45) Bekanntmachung des Hinweises auf die
Patenterteilung:
**15.06.94 Patentblatt  94/24**

(84) Benannte Vertragsstaaten:
**AT DE FR GB SE**

(56) Entgegenhaltungen:
**EP-A- 0 205 277**
**WO-A-88/06544**
**DE-A- 3 546 575**
**GB-A- 2 078 322**

(73) Patentinhaber: **ROBERT BOSCH GMBH**
**Postfach 30 02 20**
**D-70442 Stuttgart(DE)**

(72) Erfinder: **BECKER, Rolf**
**Mozartweg 3**
**D-7257 Ditzingen 5(DE)**

(74) Vertreter: **Kammer, Arno, Dipl.-Ing.**
**ROBERT BOSCH GmbH**
**Zentralabteilung Patente**
**Postfach 30 02 20**
**D-70442 Stuttgart (DE)**

**Beschreibung**

Stand der Technik

Ein Antiblockierregelsystem mit dem Merkmalen des Oberbegriffs des Anspruchs 1 ist aus der WO 88/ 06544 bekannt. Dort wird die Fahrzeugverzögerung aus der Steigung einer Hilfsreferenz ermittelt. Die ermittelte Steigung bestimmt während eines schnellen Absinkens der Radgeschwindigkeiten den Verlauf des für die Schlupfbestimmung benötigten Referenzsignals.

Vorteile der Erfindung

Die Erfindung zielt darauf ab, bei Bergabfahrt mit ABS-Regelung ein zu empfindliches Regeln zu vermeiden. Dies kommt zustande, wenn man die ermittelte Fahrzeugverzögerung dazu benutzt, die Empfindlichkeit der Regelung zu variieren und zwar mit größer werdender Fahrzeugverzögerung die Regelung unempfindlicher zu machen. Bei hohem $\mu$ ist ein empfindliches Reagieren des Reglers nicht notwendig und es können größere Schlupfwerte und/oder Radverzögerungen zugelassen werden. Dagegen muß die Regelung sehr empfindlich bei geringem $\mu$ sein. Beim Bergabfahren wird nun ein Teil des Kraftschlusses Reifen-Fahrbahn dazu benutzt, den Hangabtrieb zu kompensieren. Die Fahrzeugverzögerung ist also bei Bergabfahrt und sonst gleichen Bedingungen geringer als bei der entsprechenden Fahrt in der Ebene. Die aufgrund der Bergabfahrt verringerte Fahrzeugverzögerung würde nun die Regelung sehr empfindlich machen, was jedoch nicht erwünscht ist, insbesondere bei Schneeauflage; hier sind große Schlupfwerte von Vorteil.

Die Empfindlichkeitsänderung kann durch Änderung von Schlupf- und/oder Verzögerungsschwellen oder durch Änderung der Regelgrößen selbst erfolgen. Die Erfindung ist jedoch auch dort anwendbar, wo eine Summe aus verschiedenen Regelgrößen gebildet wird und diese Summe dann mit Schwellen verglichen wird. Hier kann man z.B. einzelne Komponenten variieren.

Figurenbeschreibung

In der Zeichnung sind Ausführungsbeispiele der Erfindung dargestellt.
Es zeigen:
Fig. 1    ein Blockschaltbild eines ersten Ausführungsbeispiels
Fig. 2    ein Blockschaltbild eines zweiten Ausführungsbeispiels
Fig. 3    ein Ausführungsbeispiel einer Erkennungsschaltung

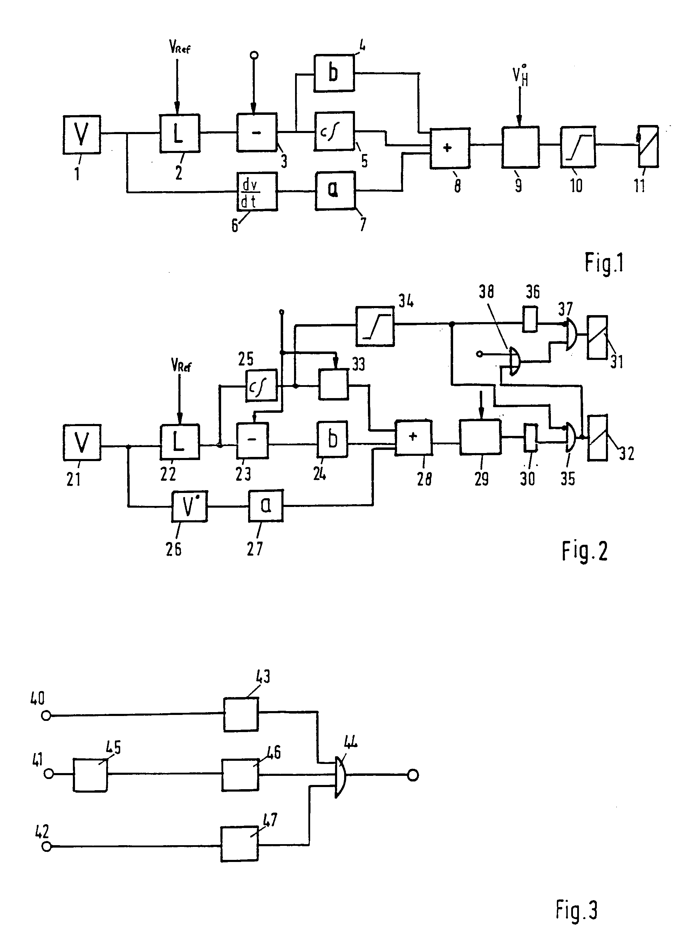

In Fig. 1 ist mit 1 ein Radgeschwindigkeitssensor bezeichnet. Das Radgeschwindigkeitssignal V wird einem Schlupfbildner 2 zugeführt, wozu diesem auch noch z.B. die gemäß der WO 88/ 06544 gebildeten Referenzgröße $V_{Ref}$ zugeführt wird. Der Schlupfwert L wird über eine Stufe 3 einmal einem Multiplizierer 4 zugeführt, der den Ausdruck b · L bildet und zum anderen einem Integrator 5, der den Ausdruck c∫L dt bildet.

Die Radgeschwindigkeit V wird in einem Differenzierer 6 differenziert; in einem Multiplizierer 7 wird dann der Ausdruck a · $\dot{V}$ gebildet.

Die drei oben erwähnten Ausdrücke werden dann in einer Additionsstufe 8 addiert. Der nachgeschaltete Block 9 variiert die Summe

$$S = L b + c\int L \, dt + a\dot{V}$$

gemäß der anliegenden Fahrzeugverzögerung, die hier als Steigungswert einer Hilfsreferenz $\dot{V}_H$ vorliegt. Mit steigender absoluten Verzögerung muß hier der obige Summenwert verkleinert werden, wenn man die Empfindlichkeit mit steigender Verzögerung herabsetzen will. In einer Schwellwertstufe 10 wird der variierte Summenwert S mit einer vorgegebenen Schwelle verglichen. Bei Übersteigen der Schwelle wird ein 3/3 Magnet-Ventil in seine Druckabbaustellung gebracht.

Erkennt z.B. die Schaltung der Fig. 3, daß eine Bergabfahrt vorliegt, so gibt diese ein Signal ab, das dem Block 3 zugeführt wird. Während dieser sonst ein zugeführtes Signal unbeeinflußt läßt, verkleinerter nun den Schlupfwert L um einen vorgegebenen Wert. Die beiden in den Blöcken 4 und 5 gebildeten Ausdrücke werden damit verkleinert. Die Schwelle der Schwellwertstufe 10 wird damit später erreicht, d.h. der Regler wurde unempfindlicher gemacht.

Beim Ausführungsbeispiel der Fig. 2 entsprechen die Blöcke 21-30 den Blöcken 1-10. Auch hier wird die Summe

$$S = bL + c\int L \, dt + a \cdot \dot{V}$$

gebildet und im Block 29 in Abhängigkeit von der Fahrzeugverzögerung variiert. Übersteigt die Summe den Schwellwert des Block 30 so werden ein Ein- und ein Auslaßventil 31 und 32 angesteuert und Druck abgebaut. Bei Bergabfahrt wird in diesem Fall der Ausdruck b · L verkleinert und durch einen Block 33 der Integralwert c∫L dt auf der Leitung zum Addierer 28 ganz unterdrückt. Der Integralwert wird jedoch in einer Schwellwertstufe 34 mit einem vorgegebenen Schwellwert verglichen. Läuft das Rad langsam in einem hohen Schlupf ein, so wird der Integralwert hoch sein und die Schwellwertstufe 34 ein Signal liefern. Dieses Signal sperrt über ein Und-Gatter 35 die weitere Ansteuerung des Auslaßventils 32. Es aktiviert aber auch einen Impulsgeber 36, der durch einen Ausgangsimpuls für die Breite des Impulses ein Und-Gatter 37 sperrt und damit eine Ansteuerung des Ventils 31 über ein Oder-Gatter 38 verhindert. (Die offene Klemme des Oder-Gatters soll mit der sonstigen hier nicht dargestellten Auswerteschaltung verbunden sein).

Bei diesem Ausführungsbeispiel wird ebenfalls die Regelung auf unempfindlich gestellt, jedoch wird zusätzlich ein Druckimpuls auf die Radbremse gegeben. Hierdurch wird ein langsam in den Schlupf laufendes Rad veranlaßt sich "normal " zu verhalten: war es nahe bei der Instabilitätsgrenze, so wird es aufgrund der Druckerhöhung schneller in Schlupf laufen und es kommt schneller zum Regelbeginn. Andererseits wird bei Kraftschlußbeiwerten, die einen hohen Schlupf erfordern (z.B. Schnee), dieser höhere Schlupf eher erreicht bzw. überhaupt erreicht.

In Fig. 3 wird an einer Klemme 40 das Fahrzeugverzögerungssignal zugeführt. Unterschreitet dieses eine Schwelle, so gibt eine Schwellwertstufe 43 ein Signal zum Und-Gatter 44. An einer Klemme 41 liegt das Druckabbausignal an. Dessen Länge wird im Block 45 gemessen. Liegen die Druckabbauzeiten unter der Schwelle einer Schwellwertstufe 46, so gibt diese ein Signal an das Und-Gatter 44. An einer Klemme 42 wird die Radbeschleunigung zugeführt. Liegt sie unterhalb einer vorgegebenen Schwelle, so gibt die Schwellwertstufe 47 ein Signal an das Und-Gatter 44. Wird eine kleine Fahrzeugverzögerung festgestellt und zusätzlich festgestellt, daß die Druckabbauzeiten kurz sind und/oder der Radanlauf nach Druckabbau schnell ist, so erzeugt das Und-Gatter 44 ein Signal, das "Bergabfahrt" signalisiert. Dieses Signal bewirkt dann die Änderung der Regelung gemäß den obigen Beispielen. Fig. 3 zeigt den Fall, daß sowohl der Zweig 41, 45 und 46 als auch der Zweig 42 und 47 zusätzlich zum Zweig 40 und 43 vorgesehen ist.

Es sei noch erwähnt, daß der Integrierer und der Differenzierer in der Schaltungen der Fig. 1 und 2 jeweils nach einem Regeleingriff (Druck- auf / bzw. abbau) rückgesetzt werden. Außerdem sei noch darauf hingewiesen, daß die Erfindung auch durch einen entsprechend programmierten Rechner realisiert werden kann.

Günstigerweise wird der Schlupf an der Vorderachse stärker verringert als an der Hinterachse.

**Patentansprüche**

1. Antiblockierregelsystem, das den Fahrzeugrädern zugeordnete Radgeschwindigkeitssensoren aufweist, deren Geschwindigkeitssignale einer Auswerteschaltung zugeführt werden, die diese zu Bremsdrucksteuersignalen zur Vermeidung eines Radblockierens verarbeitet und das Bremsdrucksteuereinrichtungen aufweist, denen die Bremsdrucksteuersignale zur Variation des Bremsdrucks zugeführt werden, wobei in der Auswerteschaltung die Fahrzeugverzögerung mit verarbeitet wird und die Empfindlichkeit der Regelung von der Fahrzeugverzögerung abhängig ist, dadurch gekennzeichnet, daß Schaltmittel zur Feststellung einer geregelten Bergabbremsung aus dem Vorliegen einer gegenüber einem Schwellwert kleineren Fahrzeugverzögerung und gegenüber vorgegebenen Schwellen kürzeren Druckabbauzeiten und/oder größeren Radgeschwindigkeitszunahmen nach Druckabbau vorgesehen sind, und daß bei Feststellung einer solchen Bremsung die Schlupfregelung unempfindlicher gemacht wird.

2. Antiblockierregelsystem nach Anspruch 1, dadurch gekennzeichnet, daß der ermittelte Schlupf um einen Anteil verringert wird.

3. Antiblockierregelsystem nach Anspruch 2, bei dem ein Druckabbau bei Überschreiten einer Schwelle durch ein Instabilitätskritetium $K = a\dot{V} + bL + c\int L$ dt eingeleitet wird, wobei a, b und c Konstante, $\dot{V}$ die Radverzögerung und L der Radschlupf sind, dadurch gekennzeichnet, daß der Schlupf L in beiden schlupfabhängigen Summanden verkleinert wird.

4. Antiblockierregelsystem nach einem der Ansprüche 1 bis 3, dadurch gekennzeichnet, daß die Verringerung an der Vorderachse größer als an der Hinterachse ist.

5. Antiblockierregelsystem nach Anspruch 2, bei dem ein Druckabbau bei Überschreiten einer Schwelle durch ein Instabilitätskriterium $K = a\dot{V} + bL + c\int L$ dt eingeleitet wird, wobei a, b und c Konstante, $\dot{V}$ die Radverzögerung, L der Radschlupf sind, dadurch gekennzeichnet, daß der Summand $c\int L$ dt bei Bergab-Bremsung im Instabilitätskriterium unberücksichtigt bleibt.

6. Antiblockierregelsystem nach Anspruch 5, dadurch gekennzeichnet, daß das Schlupfintegral mit einer Schwelle verglichen wird und daß bei Überschreiten dieser Schwelle ein Druckaufbauimpuls ausgelöst wird.

7. Antiblockierregelsystem nach einem der Ansprüche 1 - 6, dadurch gekennzeichnet, daß die Größe der Fahrzeugverzögerung aus der Steigung der für die Schlupfbildung benötigten Referenzgrößen gewonnen wird.

## Claims

1. Antilock brake adjusting system which has wheel speed sensors which are assigned to the wheels of the vehicle and whose speed signals are fed to an evaluation circuit which processes the said signals to form brake-pressure control signals for avoiding locking of the wheels and has brake-pressure control devices to which the brake-pressure control signals for varying the brake pressure are fed, the deceleration of the vehicle also being processed in the evaluation circuit and the sensitivity of the control being dependent on the deceleration of the vehicle, characterized in that switching means for determining a controlled downhill braking from the presence of a deceleration of the vehicle which is smaller than a threshold value and with respect to prescribed thresholds of shorter pressure-reduction times and/or greater increases in wheel speed after pressure reduction are provided, and in that when such a braking operation is determined the slip control is made less sensitive.

2. Antilock brake adjusting system according to Claim 1, characterized in that the slip which is determined is reduced by a portion.

3. Antilock brake adjusting system according to Claim 2, in which a pressure reduction is initiated when a threshold is exceeded by means of an instability criterion $K = a\dot{V} + bL + c\int L\, dt$, a, b and c being constants, $\dot{V}$ being the wheel deceleration and L being the wheel slip, characterized in that the slip L is reduced in both slip-dependent summands.

4. Antilock brake adjusting system according to one of Claims 1 to 3, characterized in that the reduction at the front axle is greater than at the rear axle.

5. Antilock brake adjusting system according to Claim 2, in which a pressure reduction is initiated when a threshold is exceeded by means of an instability criterion $K = a\dot{V} + bL + c\int L\, dt$, a, b and c being constants, $\dot{V}$ being the wheel deceleration, L being the wheel slip, characterized in that the summand $c\int L\, dt$ is not included in the instability criterion in the case of downhill braking.

6. Antilock brake adjusting system according to Claim 5, characterized in that the slip integral is compared with a threshold, and in that a pressure increase pulse is triggered when this threshold is exceeded.

7. Antilock brake adjusting system according to one of Claims 1-6, characterized in that the extent of the deceleration of the vehicle is acquired from the gradient of the reference variables required for slip generation.

## Revendications

1. Système de régulation d'anti-blocage qui comprend des détecteurs de la vitesse des roues associés aux roues du véhicule, détecteurs dont les signaux de vitesse sont envoyés à un circuit d'exploitation, qui retraite ceux-ci pour en faire des signaux de commande de la pression de freinage en vue d'éviter un blocage des roues et qui présente des dispositifs de commande de la pression de freinage, auxquels sont envoyés les signaux de commande de la pression de freinage pour faire passer la pression de freinage, la décélération du véhicule étant en même temps retraitée dans le circuit d'évaluation, et la sensibilité de la régulation étant fonction de la décélération du véhicule, système de régulation d'anti-blocage, caractérisé en ce que l'on prévoit des circuits pour déterminer un freinage régulé en cas de forte descente à partir de l'existence d'une décélération du véhicule plus petite qu'une valeur de seuil et de temps de chute de la pression plus courts que des seuils prédéfinis et/ou d'augmentations plus grandes de la vitesse des roues après la chute de la pression et en ce que l'on rend la régulation du glissement plus insensible quand on détermine un tel freinage.

2. Système de régulation d'anti-blocage selon la revendication 1, caractérisé en ce que le glissement détecté est réduit d'une fraction.

3. Système de régulation d'anti-blocage selon la revendication 2, dans le cas duquel on introduit une chute de pression dans le cas de dépassement d'un seuil par un critère d'instabilité $K = a\dot{V}\, b\, L + c\, S.L\, dt$, dans lequel a, b et c sont des constantes, $\dot{V}$ est la décélération des roues et L le glissement des roues , système de régulation d'anti-blocage caractérisé en ce que le glissement L est réduit dans les deux termes de la somme fonction du glissement

4. Système de régulation d'anti-blocage selon l'une des revendications 1 à 3, caractérisé en ce que la diminution est plus grande sur l'essieu avant que sur l'essieu arrière.

5. Système de régulation d'anti-blocage selon la revendication 2, dans le cas duquel on introduit une chute de pression en cas de franchissement d'un seuil par un critère d'instabilité K = a $\dot{V}$ + b L + c S. $\dot{L}$ dt, dans lequel a, b et c sont des constantes, $\dot{V}$ est la décélération des roues, L le glissement des roues ,caractérisé en ce que le terme de la somme c S L demeure intouché dans le cas de freinage en forte pente dans le critère d'instabilité.

6. Système de régulation d'anti-blocage selon la revendication 5, caractérisé en ce que l'intégrale de glissement est comparée à un seuil et en ce qu'en cas de dépassement de ce seuil une impulsion de montée de la pression est déclenchée.

7. Système de régulation d'anti-blocage selon l'une des revendications 1 à 6, caractérisé en ce que l'on obtient la grandeur de la décélération du véhicule à partir de la pente des grandeurs de référence qui sont nécessaires à la formation du glissement.

Fig.1

Fig.2

Fig.3